Europäisches Patentamt

(19) European Patent Office

Office européen des brevets

(11) Publication number: **0 274 002 B1**

# EUROPEAN PATENT SPECIFICATION

(45) Date of publication of patent specification: **26.06.91**

(21) Application number: **87110401.4**

(22) Date of filing: **16.11.81**

(51) Int. Cl.5: **G01G 19/387**

(60) Publication number of the earlier application in accordance with Art.76 EPC: **0 052 498**

(54) **Combinatorial weighing or counting method.**

(30) Priority: **18.11.80 JP 162983/80**
**12.01.81 JP 3354/81**
**27.01.81 JP 11318/81**
**27.06.81 JP 100088/81**

(43) Date of publication of application:
**13.07.88 Bulletin 88/28**

(45) Publication of the grant of the patent:
**26.06.91 Bulletin 91/26**

(84) Designated Contracting States:
**AT BE CH DE FR GB IT LI LU NL SE**

(56) References cited:
**EP-A- 64 554**
**DE-A- 3 121 454**
**US-A- 3 939 928**

(73) Proprietor: **KABUSHIKI KAISHA ISHIDA KOKI SEISAKUSHO**
**44, Syogoinsanno-cho Sakyo-ku**
**Kyoto-shi Kyoto 606(JP)**

(72) Inventor: **Minamida, Kazukiyo**
**c/o 44, Syogoinsanno-cho Sakyo-ku**
**Kyoto-shi Kyoto 606(JP)**
Inventor: **Asai, Yoshiharu**
**c/o 44, Syogoinsanno-cho Sakyo-ku**
**Kyoto-shi Kyoto 606(JP)**
Inventor: **Kakita, Yokio**
**c/o 44, Syogoinsanno-cho Sakyo-ku**
**Kyoto-shi Kyoto 606(JP)**
Inventor: **Mikami, Yoshiharu**
**c/o 44, Syogoinsanno-cho Sakyo-ku**
**Kyoto-shi Kyoto 606(JP)**
Inventor: **Konishi, Satoshi**
**c/o 44, Syogoinsanno-cho Sakyo-ku**
**Kyoto-shi Kyoto 606(JP)**

(74) Representative: **Hillier, Peter et al**
**Reginald W. Barker & Co., 13, Charterhouse Square**
**London, EC1M 6BA(GB)**

## Description

The present invention relates to a combinatorial weighing or counting method.

A combinatorial weighing system comprising a plurality of weighing sections, computes combinations on the basis of weight values indicated by the weighing sections, searches for a particular combination whose addition value is equal or closest to a set value (weight or number of articles) and decides it as a combination for discharge.

The combinatorial weighing and collection of articles weighed out in this type of combinatorial weighing system are performed, for example, in the following manner: Groups of articles fed into a plurality of weighing hoppers are weighed by weighing machines associated with the weighing hoppers, addition values are computed of any desired number of combinations or all possible combinations of the weight values thus obtained the addition values are individually compared with a set weight to find a particular combination whose addition value is equal or closest to the set weight, and articles are discharged from the corresponding hoppers into a discharge chute and then collected in a timing hopper. There is another arrangement wherein weight values indicated by the weighing machines are each divided by the single-article weight to convert each value into the number of articles, addition is performed on each of the combinations of these numbers to find a particular addition value equal or closest to a set number and articles are discharged and collected.

In each case very accurate computations can be performed but recently there has been a requirement for improved weighing capability. In order to improve weighing capability, however, it is important to increase the feed rate, weighing rate and discharge rate of articles and to efficiently collect articles discharged in each weighing operation.

US-A-3 939 928 discloses a combinatorial weighing system having a plurality of weighing hoppers with a plurality of weighing machines respectively associated with the weighing hoppers for weighing articles received in the weighing hoppers. An arithmetic section performs combinatorial operation on the basis of weighed data from the weighing machines and send discharge signals to the weighing hoppers. A collecting chute collects articles discharged from the weighing hoppers and discharges them through a discharge port.

Of these three rates, it is possible to increase the weighing and discharge rates, but what matters most is the rate of collection of articles. More particularly, collection of articles, which are selected by combinatorial operation and discharged, at, e.g., twice the conventional rate of collection is attended with a difficulty that because of the distance between respective weighing hoppers and the timing hopper, articles discharged the last time mix with those discharged this time. Further, if the number of weighing machines is increased to increase the weighing accuracy, the chute must be correspondingly increased in size and the distance referred to above becomes longer. As a result, articles discharged in two successive operations mix with each other or articles fall at a greater speed and collide against articles at the discharge port of the collecting chute, with possible damage to these articles.

As for the weighing and discharge rates, in the conventional weighing (or counting) system, when a particular combination for discharge is obtained from the results of combinatorial operation and articles are discharged no weight data necessary for combinatorial operation are obtained from the weighing machines from which articles have been discharged and which are now empty, so that the computing function remains stopped until these weighing machines are newly fed with articles. That is, it has been impossible to reduce the article discharge interval in the conventional system to below the interval corresponding to the time required for weighing machines to discharge articles and then receive fresh articles and deliver weight data plus the time required for combinatorial operation. When the mechanism of the conventional system is investigated it is seen that the weighing machines which have discharged articles cannot participate in combinatorial operation until they are newly fed with articles but that the remaining weighing machines are delivering weight data. This means that if the next discharge combination is obtained by performing combinatorial operation by using the weight data from the remaining weighing machines, the article discharge interval can be shortened and weighing or counting speed can be doubled.

EP-A-0064554 is relevant under Article 54(3) to the extent permitted by Article 56 of the European Patent Convention. This document discloses a combination-weighing method and apparatus, in which a plurality of scales weigh each of a plurality of groups of articles having various unit weights; total weight values are calculated for all conceivable combinations or a special sort of combinations of the measured values; one combination is selected whose total weight value is equal to or nearest to a predetermined value; and then articles of the selected combination are discharged from the corresponding scales so that the desired weight and/or number of products are obtained.

An object of the present invention is to provide an improved combinatorial weighing system.

According to the present invention, there is provided a weighing or counting method comprising the steps of performing combinatorial operation on the basis of weighed data from a plurality of weighing machines, selecting an optimum combination whose sum is equal or closest to a set value, causing the weighing machines corresponding to that combination to discharge their articles, and during the discharge of articles from the weighing machines and during the feeding of fresh articles to the same weighing machines, performing combinatorial operation on the basis of weighed data from a fixed number of weighing machines selected from the remaining weighing machines which have not discharged their articles, priority being given in this selection, up to said fixed number, to those weighing machines which have not been selected and thus which have not discharged their contents for the greater number of combinatorial computation cycles, and selecting an optimum combination whose sum is equal or closest to the set value, the particular combination thus obtained being determined as the combination for the next discharge.

With this arrangement, the weighing and discharge rates can be increased.

An embodiment of the invention will now be described with reference to the accompanying drawings, in which:-

Fig. 1 is a schematic elevational sectional view of an article collecting apparatus in a combinatorial weighing system;

Fig. 2 is an enlarged view of a portion of the apparatus shown in Fig. 1;

Figs. 3 and 4 are time charts each showing an operation timing for the apparatus of Fig. 1;

Fig. 5 is a schematic elevational sectonal view showing another article collecting apparatus in a combinatorial weighing system;

Fig. 6 is a plan view of the apparatus of Fig. 5;

Figs. 7 to 9 are time charts each showing an operation timing for the apparatus of Fig. 5;

Fig. 10 is a schematic front view showing a modification of the apparatus of Fig. 5;

Fig. 11 is a schematic plan view of the apparatus of Fig. 10;

Fig. 12 is a schematic side view of the apparatus of Fig. 10;

Fig. 13 is a schematic front view showing another modification of the apparatus of Fig. 5;

Fig. 14 is a schematic plan view of the apparatus of Fig. 13;

Fig. 15 is a schematic side view of the apparatus of Fig. 13;

Fig. 16 is a schematic plan view showing a further modification of the apparatus of Fig. 5;

Fig. 17 is a side view of the apparatus of Fig. 16;

Fig. 18 is a schematic plan view showing a further modification of the apparatus of Fig. 5;

Fig. 19 is a schematic side view of the apparatus of Fig. 18;

Fig. 20 is a schematic plan view showing a still another modification of the apparatus shown in Fig. 5;

Fig. 21 is a schematic side view of the apparatus shown in Fig. 20;

Fig. 22 is a block diagram of a combinatorial weighing system according to the present invention; and

Fig. 23 is a flowchart showing operating procedures in the system of Fig. 22.

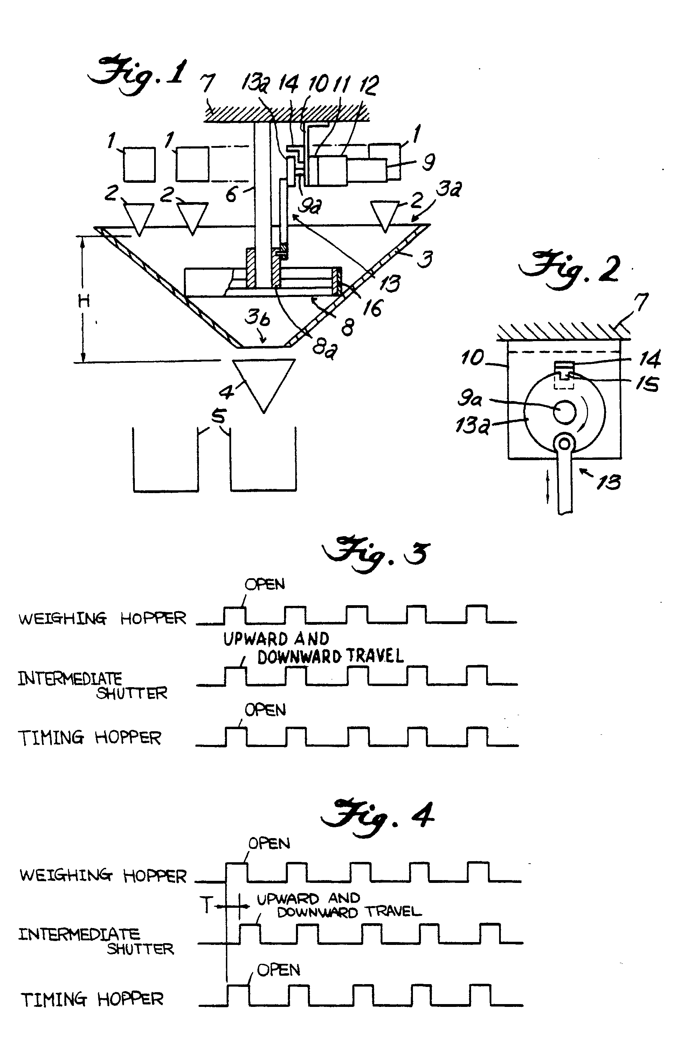

In Fig. 1, the numeral 1 denotes weighing machines; 2 denotes weighing hoppers respectively associated with the weighing machines 1; 3 denotes a collecting chute; 4 denotes a timing hopper; and 5 denotes buckets operatively connected to a packaging machine or the like. There are provided article feeders (not shown) respectively associated with the weighing hoppers 2. It is possible to use feeders of the known type designed such that when the associated weighing hoppers have discharged articles and become empty, the feeders are each started to feed a single article or a set number of articles or a set weight of articles to the associated weighing hoppers and then stop.

The numeral 6 denotes a main shaft disposed centrally above the inlet port 3a of the collecting chute 3 and suspended from the lower surface of a frame 7; and 8 denotes an intermediate shutter vertically movably installed on the lower end of the main shaft 6. The numeral 9 denotes a motor which, through a speed reducer 11 and a clutch brake 12, is attached to a bracket 10 suspended from the frame 7 at a predetermined position; and 13 denotes a crank mechanism interposed between the main shaft 9a of the motor and the boss 8a of the intermediate shutter 8. The numeral 14 denotes a sensor, e.g., a photocell, disposed at a predetermined position on one side of the bracket 10 and adapted to accurately stop the rotation of the motor 9 by sensing the light passing through a notch 15 formed in the cam 13a of the crank mechanism 13, as best seen in Fig. 2.

The intermediate shutter 8 comprises an elastic buffer member 16, e.g., "bancoran" (hardness of about 70), bonded to the vertical (i.e., cylindrical) outer peripheral surface and is positioned about half the distance, the so-called "head" H, between the weighing hoppers 2 and the timing hopper 4, so that it contacts the inner peripheral surface of the collecting chute 3. In addition, the intermediate shutter 8 may be of any desired shape, e.g., circular or polygonal, corresponding to the shape of the collecting chute 3. Further, the outer peripheral surface may be oblique (i.e., conical) instead of vertical as shown. The operation timing for the intermediate shutter 8 is controlled by signals from the timing hopper 4.

The manner of collecting articles in the apparatus described above will now be described with reference to the time charts shown in Figs. 3 and 4.

At the start of operation according to these time charts, it is assumed that the weighing hoppers 2, the intermediate shutter 8 in the collecting chute 3 and the timing hopper 4 have been closed, that each weighing hopper 2 has been fed with articles, and that articles according to optimum combinations have been fed to the intermediate shutter and the timing hopper, respectively.

In cases where articles with low friction, such as wrapped candy, are to be collected at twice the usual speed in order to increase the weighing capability, articles which have been fed to the weighing hoppers 2 are weighed by the weighing machines 1, addition is performed on the respective combinations of the indicated weight values, and a particular combination whose addition value is equal or closest to a set weight is selected, whereupon the weighing hoppers 2 corresponding to the optimum combination are opened to discharge articles to the collecting chute 3. At this time, as can be seen in Fig. 3, the timing hopper 4 is opened simultaneously with the weighing hoppers 2 to discharge articles contained therein into the bucket 5 located below. A signal is sent from the timing hopper 4 to the intermediate shutter 8, so that the intermediate shutter 8 is raised through the crank mechanism 13 by the driving of the motor 9 to allow the articles fed at the $\frac{1}{2}$ H position to be collected in one place therebelow, i.e., the timing hopper 4. In this case, the time required for the intermediate shutter 6 to make one upward and downward travel is set such that it completes its travel before the articles discharged from each weighing hopper 2 reach the $\frac{1}{2}$ H position. Further, it is so arranged that the closing of the weighing hoppers 2 and timing hopper 4 is effected immediately after the discharge of articles.

Thus, as soon as the weighing hoppers 2 are opened, they discharge articles along the inner surface of the collecting chute 3, and the presence of the intermediate shutter 8 positioned at $\frac{1}{2}$ H allows the articles to strike the elastic buffer member 16 bonded to the outer peripheral surface thereof for shock absorption. Since the time required for the intermediate shutter 8 to make one upward and downward travel is set such that it completes its travel before articles discharged from weighing hoppers 2 reach the intermediate shutter 8 positioned at half the head H, as described above, the intermediate shutter 8 intercepts the articles discharged from weighing hoppers 2 at the $\frac{1}{2}$ H position in the collecting chute 3.

The articles intercepted at the $\frac{1}{2}$ H position are allowed to descend along the inner surface of the collecting chute 3 at the same time as the intermediate shutter 8 is raised, the articles being discharged into the timing hopper 4 through the discharge port 3b. As a result, even if the articles are discharged at high speed from the weighing hoppers 2, the presence of the intermediate shutter 8 in the collecting chute 3 ensures that groups of articles are completely separated at each cycle and successively collected in the timing hopper 4. Further, since the intermediate shutter 8 has its outer peripheral surface shaped vertical (i.e., cylindrical), articles fed simultaneously with its upward movement can be discharged downwardly and when it lowers it will accurately stop at the predetermined position as soon as the photocell 14 disposed at the predetermined position on the bracket 10 receives light. Further, since the head of articles discharged by the upward travel of the intermediate shutter 8 is equal to half the distance to the timing hopper 4, i.e., $\frac{1}{2}$ H, the falling speed thereof is low, preventing the articles from crashing against each other at the discharge port 3b of the collecting chute 3.

The timing hopper 4 discharges articles into the bucket 5 therebelow as soon as it is opened, and immediately after discharge, it is closed to be ready to collect articles to be discharged at the next cycle. By discharging articles from the weighing hoppers 2 in the manner described, it is possible to perform continuous article collecting operation.

The time chart of Fig. 4 illustrates an operation timing for collecting articles with high friction, such as macaroni. In the case of collecting articles with high friction, since the time taken for articles to fall from the weighing hoppers 2 to the timing hopper 4 via the collecting chute 3 is greater than that required for articles with low friction described with reference to Fig. 3, the upward travel of the intermediate shutter 8 must be arranged to correspond to the falling speed of articles. Thus, when the weighing hoppers corresponding to a selected optimum combination are opened to discharge articles, the timing hopper 4 is simultaneously opened as in the case of Fig. 3 so that the articles contained therein are discharged into the bucket 5 therebelow while the above-described signal from the timing hopper 4 is sent to the intermediate shutter 8 with a lag corresponding to a timer time T to cause the intermediate shutter 8 to travel upward so as to discharge articles into the timing hopper 4. In addition, it goes without saying that the intermediate shutter 8 is set such that it completes one upward and downward travel before the articles discharged from the weighing hoppers 2 reach the $\frac{1}{2}$ H position in the collecting chute 3.

In the system described above, even in the case of articles easy to discharge, it is expected impossible to discharge them more than 100 times/min. More particularly, let the overall capability for combinatorial computation, selection and discharge using the weighing hoppers 2 be n times/min. Then, the intermediate shutter has to operate at n times/min. However, because of its arrangement it is impossible for the intermediate shutter to operate 100 times/min or more, limiting the weighing capability of the weighing hoppers 2.

A system described below eliminates such drawback.

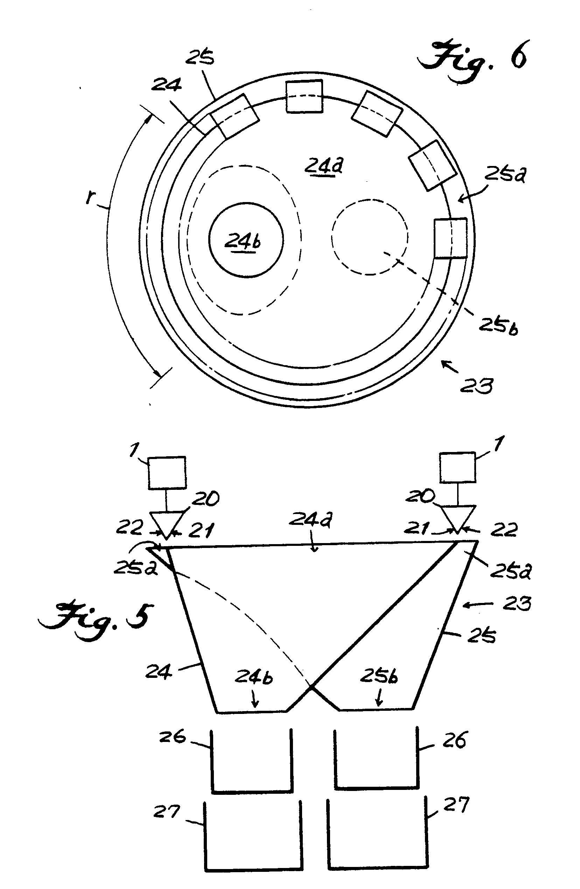

Referring to Figs. 5 and 6, weighing hoppers are denoted by 20, the weighing hoppers being of the double-outlet type having two discharge ports 21 and 22. The numeral 23 denotes a chute of double construction comprising substantially conical inner and outer chute sections 24 and 25 crossing each other, and inlet ports 24a and 25a arranged in two circles one within the other and discharge ports 24b and 25b in bifurcated form. The numeral 26 denotes a timing hopper; and 27 denotes buckets operatively connected to a packaging machine or the like.

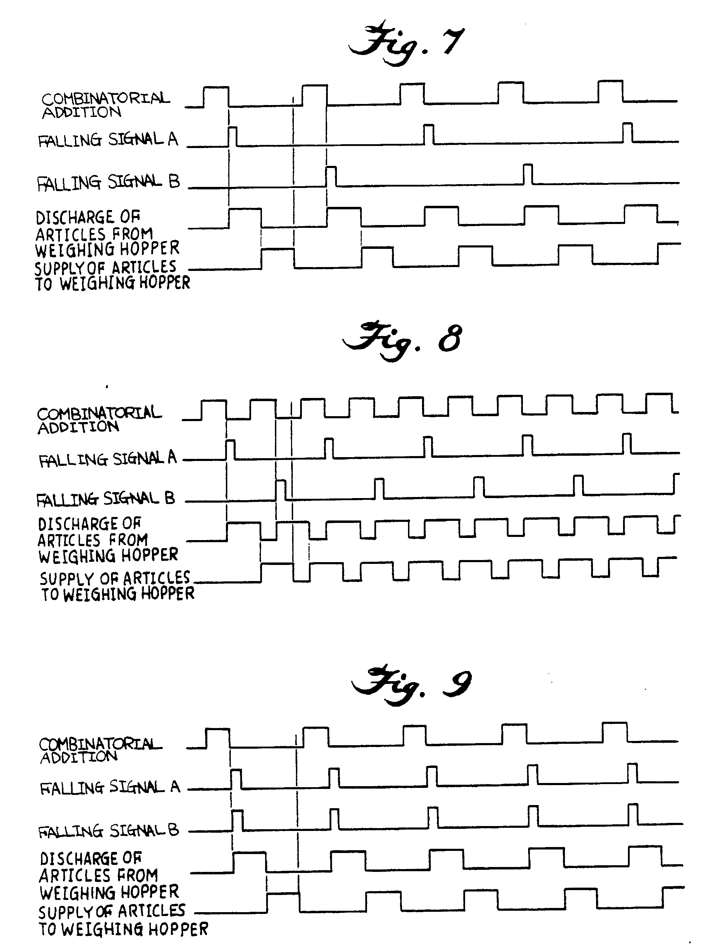

The inner and outer chute sections 24 and 25 of the chute 23 cross each other; the timing (for a fall signal A in Figs. 7 to 9 to be later described) is such that articles from a plurality of weighing hoppers (about 2 or 3 weighing hoppers) disposed in a position (indicated by an arrow r in Fig. 6) where the intersection line of the inner and outer chute sections is nearly horizontal will be always discharged into the inner chute section 24.

The manner of collecting articles by the apparatus described above will now be described with reference to timing charts for fall signals shown in Figs. 7 to 9.

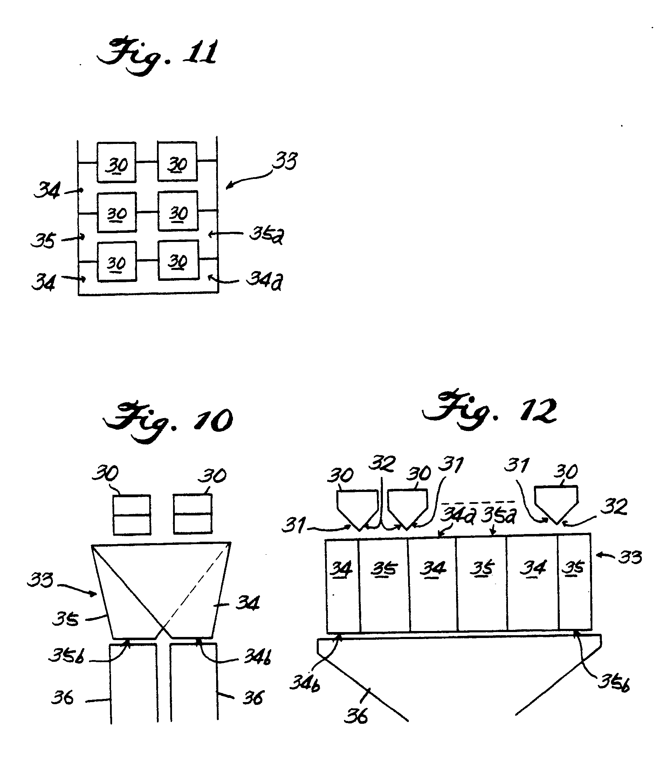

Figs. 7 and 8 refer to a case where each time combinations of weight values are computed, a particular combination whose addition value is equal or closest to a set weight is selected and articles are discharged from the weighing hoppers corresponding to the selected combination, wherein fall signals A and B are alternately delivered in connection with respective operations of combinatorial addition. In the case of Fig. 8, during discharge of articles selected in the last operation of combinatorial addition and during feeding of articles to weighing hoppers which are now empty, the next operation of combinatorial addition is performed on the weight values of articles not selected the last time and/or weight values not used in the last operation of combinatorial addition. Fig. 9 refers to a case where in each operation of combinatorial addition, a combination whose addition value is equal or closest to a set weight and another combination whose addition value is the second closest are obtained and the two sets of articles corresponding to these two combinations are simultaneously and separately discharged on the basis of fall signal A and B which are issued at the same time.

Groups of articles fed to the weighing hoppers are weighed by the associated weighing machines 1 and addition is performed on each combination of the indicated weight values to select a combinations whose addition value is equal or closest to a set weight, and the weighing hoppers corresponding to the selected combination are caused to open one of their respective discharge ports 21 and 22 to discharge the articles into the chute 23. With the timing for the fall signal A shown in Fig. 7, the articles corresponding to the selected combination are discharged from the discharge ports 21 of the weighing hoppers 20 into the inner chute section 24 of the chute 23, and with the timing for the fall signal B shown in Fig. 7, the articles corresponding to the selected combination are discharged from the discharge ports 22 of the weighing hoppers 20 into the outer chute section 25.

Thus, the method and apparatus for collecting articles according to this system are designed to discharge articles from the discharge ports 21 and 22 of the weighing hoppers 20 at a suitable time interval separately into the inner and outer chute sections 24 and 25 of the chute 23. Thus, if the capability to combinatorially selectively discharge articles from the discharge ports 21 and 22 of the weighing hoppers 20 is n times/min, then it follows that the capability to collect articles through the timing hoppers 26 is such that the inner and outer chute sections 24 and 25 each operate n/2 times/min in the case of Figs. 7 and 8 and n times/min in the case of Fig. 9. In addition, since the inner and outer chute sections 24 and 25 cross each other in the region indicated by the arrow r in Fig. 6, as described above, articles from a plurality of weighing hoppers disposed in that region will be always discharged into the inner chute section 24. Articles discharged from either of the inner and outer chute sections 24 and 25 in the manner described above are respectively collected in the timing hoppers therebelow, and the collected articles are discharged into the buckets therebelow as soon as the timing hoppers are opened.

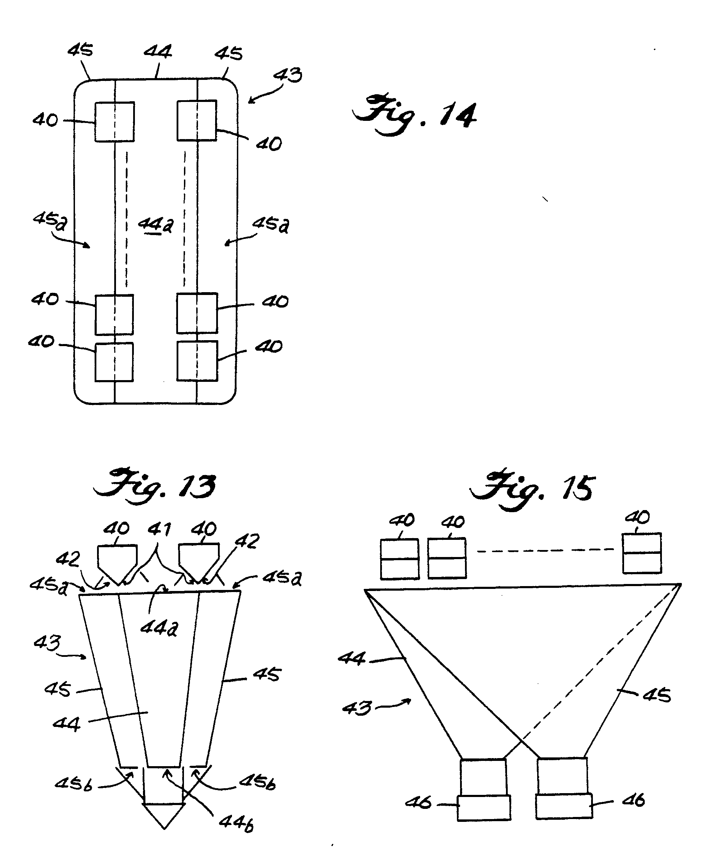

Figs. 10 to 12 show a modification of the system described above with reference to Figs. 5 and 6.

In this modification, the circular arrangement of weighing hoppers 20 in the above embodiment is replaced by a linear arrangement wherein weighing hoppers 30 are arranged in two lines above and longitudinally of a chute 33 having numbers of chute sections 34 and 35 of required width separated from each other. More particularly, first discharge ports 31 of the weighing hoppers 30 are disposed on both sides above the inlet ports 34a of the chute sections 34 of the chute 33 and second discharge ports 32 of the weighing hoppers 30 are disposed on both sides above the inlet ports 35a of the chute sections 35 of the chute 33. As for the timing for fall signals, it is so arranged that articles are discharged from the discharge ports 31 of the weighing hoppers 30 into the chute sections 34 of the chute 33 when selection is made with the timing for the fall signal A shown in Fig. 7 and from the discharge ports 32 of the weighing hoppers 30 into the chute sections 35 of the chute 33 with the timing for the fall signal B. Collection chutes 36 are respectively provided below the discharge ports 34b and 35b of the chute sections 34 and 35 of the chute 33 for collecting articles discharged from the chute sections 34 and 35 and then discharging them to the next processing step. As compared with the circular arrangement in the above system the chute configuration is simple and there is no need to adjust the timing for fall signals owing to the crossing of the inner and outer chute sections, a fact which leads to improved weighing accuracy.

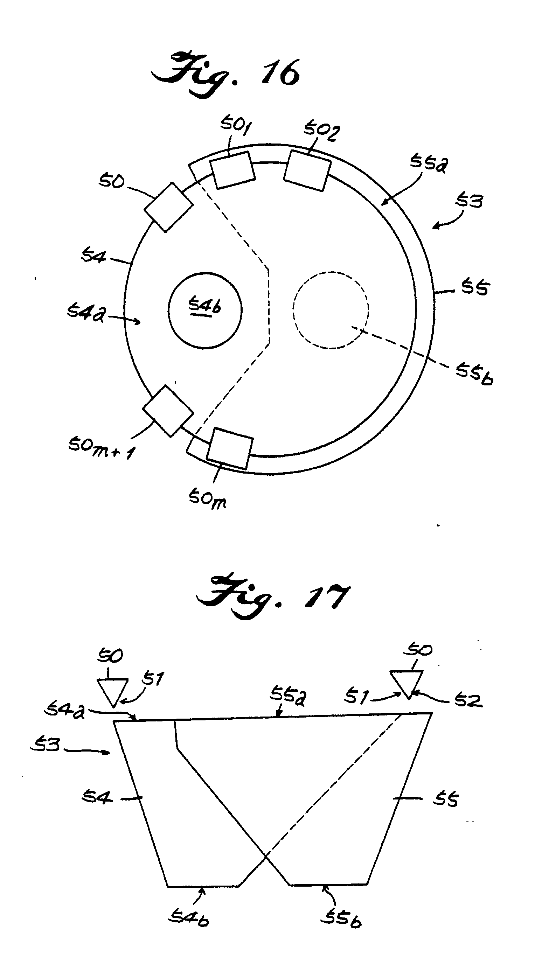

Figs. 13 to 15 show another modification of the system described above with reference to Figs. 5 and 6.

In this modification, as in the first modification, weighing hoppers 40 are linearly arranged in such a manner that the weighing hoppers 40 are disposed on both side above longitudinally of a chute 43 which comprises three longitudinally extending chute sections, namely, a central chute section 44 and two lateral chute sections 45. First discharge ports 41 of the weighing hoppers 40 are disposed on both sides above the inlet port 44a of the central chute section 44 of the chute 43, and second discharge ports 42 of the weighing hoppers 40 are disposed above the inlet ports 45a of the lateral chute sections 45. The timing for fall signals is set in the same manner as in the first modification. Thus, the timing for the fall signal B in Fig. 7 is set such that articles are discharged from the discharge ports 45 of the weighing hoppers 40 into the lateral chute sections 45 of the chute 43 at the same time. Timing hoppers 46 are provided below the discharge port 44b of the central chute section 44 of the chute 43 and below the discharge ports 45b of the lateral chute sections 45 for collecting articles discharged from the central and lateral chute sections 44 and 45.

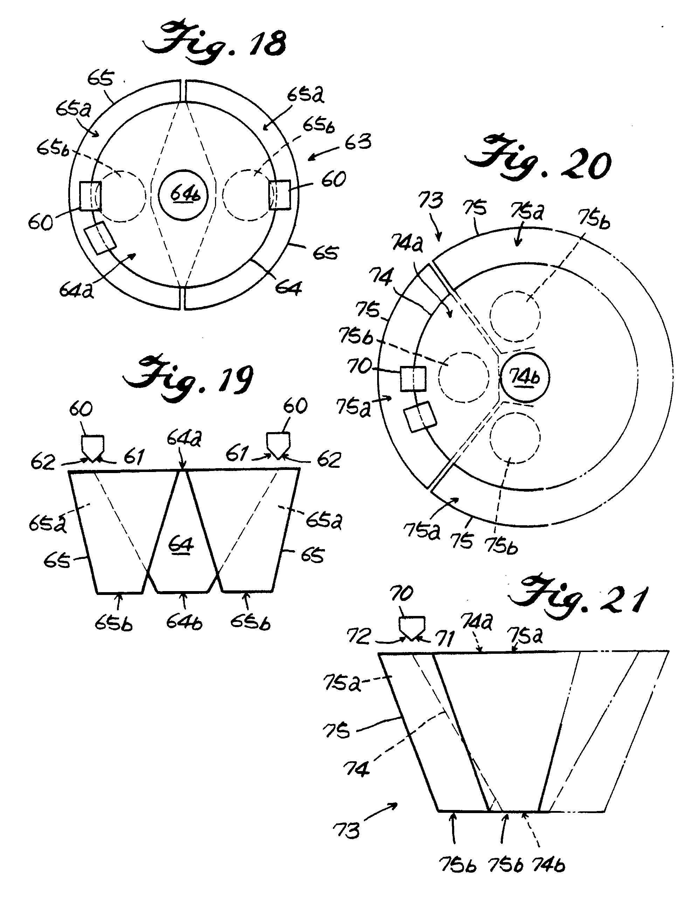

Figs. 16 and 17 show another modification of the system shown in Figs. 5 and 6.

With the chute 23 in the system described above, the inner and outer chute sections 24 and 25 differ in the capability to discharge articles, presenting various problems. The inner chute section 24 is internally in the form of a cone having a steep slope, while the outer chute section 25 has a steep slope in a region nearer to the discharge port 25b but a gentle slope in a farther region and is bifurcated as it bypasses the periphery of the inner chute sections 24, defining a long discharge path which results in a reduced rate of article discharge. As a result, the timing for discharge of articles in combinatorial weighing becomes inaccurate. Further, in the bypass portion of the outer chute section 25, a narrow discharge path is defined between the inner and outer chute sections 24 and 25, causing a bridge phenomenon depending upon the kind of the articles, which may make it impossible to discharge articles. Further, the configuration of the outer chute section 25 is so complicated that it is hard to fabricate.

In Figs. 16 and 17, the numeral 53 denotes a chute comprising an inverted frusto-conical inner chute section 54 and an outer chute section 55, these sections being arranged so that their upper openings 54a and 55a are concentric with each other and they cross each other such that they do not communicate with each other, their lower discharge ports 54b and 55b being disposed side by side. A portion of the outer chute section 55 is removed in a region where the outer peripheral surface of the inner chute 54 and the outer chute 55 define a narrow discharge path therebetween and where the bottom surface presents a gentle slope. A large number (n) of weighing hoppers 50 are arranged in a circle above the chute 53 and on the boundary between the inner and outer chute sections 54 and 55. The hoppers 50 are each provided with an independent article feeder (not shown), so that when hoppers 50 have discharged articles to become empty, the associated feeders feed a suitable amount or number of articles to the hoppers 50. Of these n weighing hoppers 50, the 1st through mth weighing hoppers $50_1$, $50_2$,...$50_m$ - (where $m<n$) disposed to overlap the inner and outer chute sections 54 and 55 have inwardly and outwardly directed discharge ports 51 and 52, while the $(m+1)$th to nth weighing hoppers $50_{m+1}$...$50_n$ disposed over the edge of the inner chute section 54 have only an inwardly directed discharge port 51.

In operation, the n weighing hoppers are fed with articles in suitable amounts or numbers from the respective feeders and the groups of articles fed thereto are weighed by the associated weighing machines. Combinations are computed of the weight values indicated by the weighing machines corresponding to the 1st to mth weighing hoppers $50_1$...$50_m$ to select a particular combination whose addition value is equal or closest to a set weight or number. Combinations are then computed of the weight values indicated by the weighing machines corresponding to those of the 1st to mth weighing

hoppers $50_1...50_m$ which were not selected in the last combinatorial operation and the weight values indicated by the weighing machines corresponding to the (m + 1)th and nth weighing hoppers $50_{m+1}...50_n$ which did not take part in the last combinatorial operation, so as to select a combination whose addition value is equal or closest to the set weight or number. The discharge ports 52 of the weighing hoppers corresponding to the combination selected in the last combinatorial operation are opened to discharge the articles therein into the outer chute section 55 to collect the articles in the latter, the collected articles being discharged through the discharge port 55b of the outer chute section 55, while the inner discharge ports 51 of the weighing hoppers corresponding to the combination selected in the combinatorial operation this time are opened to discharge the articles therein into the inner chute section 54 to collect the articles in the latter, the collected articles being discharged through the discharge port 54b thereof. The now-empty hoppers are fed with articles in suitable amount or number from the corresponding article feeders and the above operations are repeated to successively select two discrete optimum combinations whose addition values are each equal or closest to the set weight or number, discharging the articles into the inner and outer chute sections 54 and 55 of the chute 53, thus collecting them in two systems.

In the above descri-ption, after two combinations have been obtained, the discharge ports of the corresponding weighing hoppers are opened to discharge the articles at the same time. However, each time one combination is obtained, the articles may be discharged from the corresponding hoppers into the predetermined chute alternately.

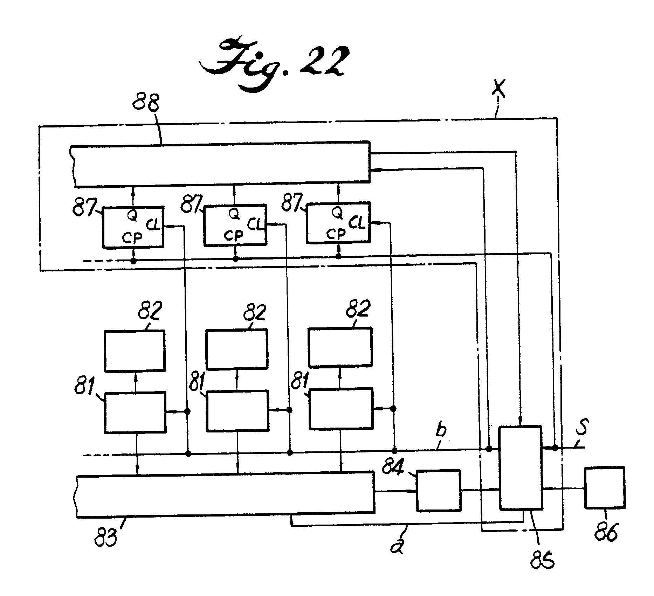

An apparatus having two discharge paths has been described above. However, the number of discharge paths is not limited to two but may be more than two. The layout of an apparatus having three discharge paths is shown in Figs. 18 and 19. In this embodiment, n weighing sections (each comprising at least a weighing machine and a weighing hopper 60 having two discharge ports) are used, and combinations are computed to select three combinations which satisfy a set value to discharge articles through three discharge ports. A chute 63 comprises an inner chute section 64 and two outer chute sections 65, the inner chute section 64 being inverted frusto-conical, having an inlet port 64a and a discharge port 64b, the outer chute sections 65 each being substantially semicircular in plan view, having an inlet port 65a and a discharge port 65b. The weighing hoppers 60 having two discharge ports 61 and 62 are disposed above the boundary between the inner and outer chute sections 64 and 65 so that they can discharge in either side.

The method of computation in this apparatus will now be described. Combinations are computed of weight data from the 1st to (n/2)th weighing sections and from the (n/2 + 1)th to nth weighing sections to decide two optimum combinations $O_1$ and $O_2$. Combinations are then computed of weight data from the 1st to nth i.e., all weighing sections, except those corresponding to the optimum combinations, to decide an optimum combination I. The weighing hoppers of the weighing sections corresponding to these combinations $O_1$, $O_2$ and I are opened for discharge. In this case, articles corresponding to the combinations $O_1$ and $O_2$ are discharged into the outer chute sections 65 and articles corresponding to the combination I are discharged into the linear chute section 64. The weighing hoppers which have discharged are newly fed with articles and the same operation repeated.

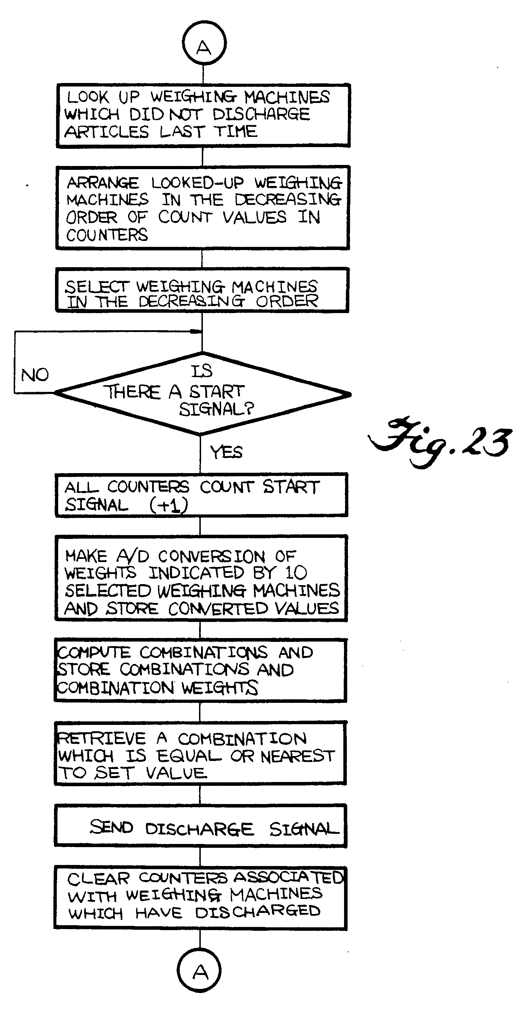

An arrangement in which four or more, e.g., M, discharge paths are provided is shown in Figs. 20 and 21. A chute 73 comprises an inverted frusto-conical inner chute section 74 and M-1 outer chute sections each having an inlet port 75a and a discharge port 75b. In this case, combinations are computed of weight data from n/(M-1)weighing sections disposed above the outer chute sections 75 to decide the optimum combinations $O_1...O_{M-1}$, and combinations are computed of weight data from the n or all weighing sections except those corresponding to the combinations $O_1...O_{M-1}$ to decide the optimum combination I. The weighing hoppers 70 of the weighing sections corresponding to these combinations $O_1...O_{M-1}$ and I are opened for discharge. In this case, for the combinations $O_1...O_{M-1}$, those discharge ports which discharge into the outer chute sections 75, i.e., the outer discharge ports 72 of the weighing hoppers 70 are opened. For the combination I, those discharge ports which discharge into the inner chute section 74, i.e., the inner discharge ports 71 of the weighing hoppers 70 are opened. The hoppers which have discharged are fed with articles for the next combinatorial operation, and the operation is repeated.

An embodiment intended to reduce the weighing-discharge time in a combinatorial weighing system according to the invention will now be described.

In Fig. 22, the numeral 81 denotes a plurality (e.g., fifteen) of weighing machines; 82 denotes a plurality of feeders for feeding articles to the weighing machines 81; 83 denotes a multiplexer composed, e.g., of analog switches adapted to selectively pass weight data from the weighing machines 81 in response to control signals from an arithmetic unit to be later described; 84 denotes an A/D converter for converting analog weight data delived from the multiplexer 83 into digital values;

85 denotes an arithmetic unit adapted to deliver control signals a to the multiplexer 83, perform combinatorial computations according to a predetermined procedure to obtain a particular combination whose additive value is equal or the nearest to a set value, and deliver discharge signals b to the weighing machines 81 corresponding to the selected combination, causing these weighing machines to discharge their articles; 86 denotes a weight setting section for setting a weight value for setting a weight value for discharge; 87 denotes a plurality of counters respectively associated with the weighing machines for counting the number of times when the associated weighing machine 81 did not discharge; and 88 denotes a selecting section which compares count values corresponding to weighing machines 81 into which discharge signals b were not inputted and selects a fixed number of weighing machines in the decreasing order of count values. The portion X surrounded with an alternate long and short dash line is the control section of this apparatus, composed of hardwear circuits using IC's or of a microcomputer.

The operation of this apparatus is performed according to the procedures shown in Fig. 2.

First, a weight value for articles to be combinatorially weighed and discharged is set by the weight setting section 86. The feeders 82 feed articles to the weighing machines 81 with suitable variations in amount. The amount to be fed is determined such that the total weight of articles in several (e.g., four or so) weighing machines is equal to the set value. When articles are fed, the arithmetic section 85 causes the selecting section 88 to look up the weighing machines which did not discharge last time and to arrange the count values in the counters 87 corresponding to the looked-up weighing machines in the decreasing order. A fixed number (e.g., ten) of weighing machines in the decreasing order of count values are selected therefrom. In addition, immediately' after the start of operation, discharge signals b have not been delivered from the arithmetic section 85 and no distinction can be made between count values in the counters 87 since they are all zero because of initial setting. The order of selection in such case may be determined, e.g., by numbering the weighing machines and selecting them in the increasing order of numbers. This method of selection is also applicable where like count values are included in selecting count values in the decreasing order when the weighing operation is going on. Since count values are for the purpose of recording the number of times when weighing machines did not discharge, the selection of weighing machines in the decreasing order of count values serve to equalize the frequencies of operation of all weighing machines so that the latter have substantially the same life. As for the order of selection of weighing machines having the same count value, there are other methods than the one numbering the weighing machines described above. For example, it is possible to select weighing machines at random by producing random numbers in the arithmetic section 85. Upon completion of the selection of weighing machines in this manner, a check is made of whether or not there is a start signal S from the packaging machine requiring a supply of articles. If there is no such signal, the check is repeated. When there is a start signal S, all counters 87 count it and their count values each increase by one. Judging that there is a start signal, the arithmetic section 85 allows the outputs from ten weighing machines 81 selected to successively pass by sending selection signals a to the multiplexer 83, the outputs being converted into digital values by the A/D converter 84 and stored in the arithmetic section 85. Combinations of the weight data on the ten selected weighing machines are computed, and the resulting combination weights and combinations are stored. A particular combination whose combination weight is equal or the nearest to the set value is retrieved. When the combination for discharge to the packaging machine is determined upon completion of the retrieval, discharge signals b are sent to the corresponding weighing machines to discharge their articles. These discharge signals b are also sent to the counters 87 corresponding to the weighing machines 81 which are to discharge their articles, thereby clearing their count values to zero.

During discharge from these weighing machines 81, the control section X restarts to execute the program from the operating procedure Ⓐ. First, it looks up the weighing machines which did not discharge their articles last time. This is done by causing the selecting section 88 to check on the weighing machines 81 to which discharge signals b were not sent. The count values in the counters 87 corresponding to the looked-up weighing machines 81 are arranged in the decreasing order. Ten weighing machines 81 are selected in the decreasing order of count values. In this case, if six of the total of fifteen weighing machines are discharging their articles, the number of weighing machines which can take part in combinatorial weighing is nine; only these nine weighing machines will be selected. The control section then assumes its stand-by position checking whether or not there is a start signal S. if there is a start signal S, it computes combinations in the same manner as before and retrieves a particular combination equal or the nearest to the set weight for discharging articles, whereupon it returns to the position of the operating procedure Ⓐ. It looks up the weighing machines which did not discharge their articles. In this case, the weighing machines which discharged their articles last time but one have already been fed with articles. Therefore, the weighing machines except those which discharged their articles last time are looked up.

Thereafter, such operation is repeated, whereby combinations can be computed to find a particular combination for discharge next time during the discharge of articles from weighing machines and during the feeding of fresh articles to weighing machines, so that weighing and discharge can be done at double the conventional speed.

In the above embodiment, the selection of a fixed number (e.g., ten) of weighing machines from those which did not discharge their articles has been made by comparing the count values in the counters 87 and selecting them in the decreasing order. However, it is possible to select a fixed number of weighing machines without such conditions. In that case, weighing machines may be selected in the increasing order of numbers assigned thereto, and there is no need to provide the counters 87.

Incidentally, when it is desired to find a particular combination whose addition value is equal or nearest to a set value by means of combinatorial computations, a large number of weight data are required in order to obtain sufficient accuracy. For example, if the number of weighing machines participating in combinatorial computations is ten, the number of all possible combinations is $2^{10} - 1 = 1023$, which may be said to be a sufficiently large number. On the other hand, if the number of weighing machines participating in combinatorial computation is five, the number of all possible combinations is $2^5 - 1 = 31$, with which it would be impossible to obtain a particular combination weight or number which is sufficiently near to a set value.

Therefore, in this invention, a sufficient number of weighing machines to provide sufficient accuracy plus some weighing machines the number of which is approximately equal to or greater than the number of weighing machines expected to discharge their articles in a single operation are used and combinations are computed on the basis of weight data obtained from these weighing machines, so that even if some weighing machines become empty due to the discharge of their articles, the remaining weighing machines allow combinatorial computations while ensuring sufficient accuracy. If the number of weighing machines participating in combinatorial computations is ten, the number of all possible combinations which are to be computed is $2^{10} - 1 = 1023$, but if fifteen weighing machines participate in combinatorial computations, it is necessary to compute $2^{15} - 1 = 32,767$ combinations, greatly increasing the computing time required, so that the efficiency is decreased. Therefore, in this invention, the number of weighing machines participating in combinatorial computations in a single operation is limited to a fixed value, e.g., ten, so as to avoid such drawback.

The method of computing combinations in this invention is not limited to the one described herein merely by way of explanation. For example, rather than storing all combination weights which are the results of combinatorial computations, each time the computation of a combination is completed, it is compared with the set weight and only that one of the combinations computed so far which is the nearest to the set weight is stored, so that when all combinations have been computed, a particular combination which is equal or the nearest to the set weight will have been found.

The description so far has been given with reference to combinatorial weighing taken as an example, but the present invention may, of course, be likewise applied to combinatorial counting. More particularly, the invention may be embodied by weighing groups of articles, dividing the weight of each group by the weight of a single article to find the number of articles in each group, performing addition on each combination of the numbers to find a combination equal or closest to a set number, and discharging the articles corresponding to that combination. Therefore, in the present invention, the term "combinatorial weighing" includes the meaning of "combinatorial counting". Combinatorial operation for the latter case may be performed by any desired method. Further, conditions for a set value for discharge may be set as desired, such as number alone or number plus weight.

## Claims

1. A weighing or counting method comprising the steps of performing combinatorial operation on the basis of weighed data from a plurality of weighing machines (1), selecting an optimum combination whose sum is equal or closest to a set value, causing the weighing machines (1) corresponding to that combination to discharge their articles, and during the discharge of articles from the weighing machines (1) and during the feeding of fresh articles to the same weighing machines (1), performing combinatorial operation on the basis of weighed data from a fixed number of weighing machines (1) selected from the remaining weighing machines (1) which have not discharged their articles, priority being given in this selection, up to said fixed number, to those weighing machines (1) which have not been selected and thus which have not discharged their contents for the greater number of combinatorial computation cycles, and selecting an optimum combination whose sum is equal or closest to the set value, the particular combination thus obtained being determined as the combination for the next discharge.

## Revendications

1. Procédé de pesage ou de comptage comprenant les opérations suivantes: exécuter une opération combinatoire sur la base de données pondérales provenant d'une pluralité de machines de pesage (1), sélectionner une combinaison optimale dont la somme est égale à une valeur fixée ou en est la plus proche, obliger les machines de pesage (1) qui correspondent à cette combinaison à décharger leurs articles, et pendant le déchargement des articles des machines de pesage (1) et pendant l'alimentation en articles frais des mêmes machines de pesage (1), exécuter une opération combinatoire sur la base de données pondérales provenant d'un nombre fixé de machines de pesage (1) sélectionnées parmi les machines de pesage (1) restantes qui n'ont pas déchargé leurs articles, la priorité étant donnée pendant cette sélection, jusqu'au nombre fixé, à celles des machines de pesage (1) qui n'ont pas été sélectionnées et, donc, qui n'ont pas déchargé leur contenu pendant le plus grand nombre de cycles de calcul combinatoire, et sélectionner une combinaison optimale dont la somme est égale à la valeur fixée ou en est la plus proche, la combinaison particulière ainsi obtenue étant déterminée comme la combinaison pour le déchargement suivant.

## Ansprüche

1. Wäge- oder Zählmethode, die die Schritte aufweist, kombinatorische Operationen auf der Grundlage von Gewichtsdaten von einer Vielzahl von Wägemaschinen (1) durchzuführen, eine optimale Kombination auszuwählen, deren Summe gleich oder nahezu gleich einem eingestellten Wert ist, die Wägemaschinen (1), die dieser Kombination entsprechen, zu veranlassen, ihre Waren abzugeben, und sowohl während der Abgabe von Waren von den Wägemaschinen (1) als auch während der Beschickung der Wägemaschinen (1) mit neuen Waren kombinatorische Operationen auf der Grundlage von Gewichtsdaten von einer festgelegten Zahl von Wägemaschinen (1) durchzuführen, die aus den restlichen Wägemaschinen (1) ausgewählt sind, die ihre Waren nicht abgegeben haben, wobei in dieser Auswahl bis zu der festgelegten Zahl denjenigen Wägemaschinen (1) Priorität eingeräumt wird, die nicht ausgewählt worden sind und ihren Inhalt für die größere Zahl von kombinatorischen Berechnungszyklen nicht abgegeben haben, sowie eine optimale Kombination auszuwählen, deren Summe gleich oder nahezu gleich dem eingestellten Wert ist, wobei die so erhaltene bestimmte Kombination als die Kombination für die nächste Abgabe festgelegt wird.

Fig.1

Fig.2

Fig.3

WEIGHING HOPPER — OPEN

UPWARD AND DOWNWARD TRAVEL

INTERMEDIATE SHUTTER

TIMING HOPPER — OPEN

Fig.4

WEIGHING HOPPER — OPEN

T — UPWARD AND DOWNWARD TRAVEL

INTERMEDIATE SHUTTER

TIMING HOPPER — OPEN

Fig. 6

Fig. 5

## Fig. 7

COMBINATORIAL
ADDITION

FALLING SIGNAL A

FALLING SIGNAL B

DISCHARGE OF
ARTICLES FROM
WEIGHING HOPPER

SUPPLY OF ARTICLES
TO WEIGHING HOPPER

## Fig. 8

COMBINATORIAL
ADDITION

FALLING SIGNAL A

FALLING SIGNAL B

DISCHARGE OF
ARTICLES FROM
WEIGHING HOPPER

SUPPLY OF ARTICLES
TO WEIGHING HOPPER

## Fig. 9

COMBINATORIAL
ADDITION

FALLING SIGNAL A

FALLING SIGNAL B

DISCHARGE OF
ARTICLES FROM
WEIGHING HOPPER

SUPPLY OF ARTICLES
TO WEIGHING HOPPER

13

Fig. 11

Fig. 10

Fig. 12

Fig. 14

Fig. 13

Fig. 15

*Fig. 16*

*Fig. 17*

Fig. 18

Fig. 19

Fig. 20

Fig. 21

*Fig. 22*

A

LOOK UP WEIGHING MACHINES
WHICH DID NOT DISCHARGE
ARTICLES LAST TIME

ARRANGE LOOKED-UP WEIGHING
MACHINES IN THE DECREASING
ORDER OF COUNT VALUES IN
COUNTERS

SELECT WEIGHING MACHINES
IN THE DECREASING ORDER

NO ◄ IS
THERE A START
SIGNAL?

YES

ALL COUNTERS COUNT START
SIGNAL (+1)

MAKE A/D CONVERSION OF
WEIGHTS INDICATED BY 10
SELECTED WEIGHING MACHINES
AND STORE CONVERTED VALUES

COMPUTE COMBINATIONS AND
STORE COMBINATIONS AND
COMBINATION WEIGHTS

RETRIEVE A COMBINATION
WHICH IS EQUAL OR NEAREST
TO SET VALUE.

SEND DISCHARGE SIGNAL

CLEAR COUNTERS ASSOCIATED
WITH WEIGHING MACHINES
WHICH HAVE DISCHARGED

A

*Fig.23*